(19) **Europäisches Patentamt / European Patent Office / Office européen des brevets**

(11) **EP 3 798 965 A1**

(12) **EUROPEAN PATENT APPLICATION**
published in accordance with Art. 153(4) EPC

(43) Date of publication:
**31.03.2021 Bulletin 2021/13**

(21) Application number: **19868953.1**

(22) Date of filing: **08.07.2019**

(51) Int Cl.:
**G06Q 40/02** *(2012.01)*    **G06Q 40/06** *(2012.01)*

(86) International application number:
**PCT/RU2019/050106**

(87) International publication number:
**WO 2020/071965 (09.04.2020 Gazette 2020/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.10.2018 RU 2018134729**

(71) Applicant: **VTB Bank (Public Joint-Stock Company)**
**St. Petersburg, 190000 (RU)**

(72) Inventor: **EFREMOV, Aleksandr Vasilievich**
**Moscow, 123007 (RU)**

(74) Representative: **Berggren Oy, Tampere**
**Visiokatu 1**
**33720 Tampere (FI)**

(54) **DECENTRALIZED DIGITAL PAYMENT SERVICE SYSTEM**

(57) The invention relates to the field of data processing and can be used for cashless payments and cashless transfers. A decentralized digital payment service system comprises i servers of banks 1, where 1=1,2,3,..., N, a distributed blockchain ledger, a client portal, and k mobile clients, where k =1,2,3,..., M, all of the elements of said system being interconnected by telecommunication means, wherein each bank server contains an automated banking system with a database in which are stored client profiles, client accounts, transactions, journal entries, consolidated digital payment unit accounts and accounts for bank settlements, and a platform for interacting with a blockchain, said platform consisting of a blockchain access module in which are stored a public key and a private key of the bank, a limit module, and a client account management module, wherein the client portal comprises a blockchain access module in which are stored a public key and a private key of the portal, and wherein each client mobile device contains an installed digital wallet application in which are stored a private key and a public key of the user.

Fig. 1

**Description**

The invention relates to the field of data processing and could be used for cashless payment and wire transfers.

The prior art discloses the "instant payment method and system with the use of recorded warranties" [US20170323294A1, G06Q20/10, 09.11.2017], including: saving account profile, each including account number and balance; receiving transaction message from a financial institution - acquirer via payment network, the message comprising specific account number, transaction amount and payment guarantee data; identification of a specific account profile, which comprises specific account number; subtracting the transaction amount from the account balance in the specific account profile; generating the payment guarantee record which includes the transaction amount and data related to the payment guarantee data; generating a return message including a response code confirming transaction authorization, and data related to the record created; transmission of the formed record to the computing system via communication network; and transmission of the formed return message to the acquirer via payment network.

The disadvantage of of this system is that instant payment system with the use of recorded warranties offers transaction authorization through payment network only, while there is no possibility of making payments and transfers between users which do not have accounts in a financial institution.

The most close to the claimed system is the "System, method and device for payment in virtual cash for commercial operations with the use of mobile communication devices" [RU No. 2406149C2, G06Q30/00, 20.04.2010], comprising data base, where information on amount of money is stored, connected to wireless device (12); and a transmitter (45) for wireless transfer of information on cash available to the wireless device (12), and this information corresponds to the account record (38) including cash amount which could be spent directly by the wireless device (12) at transaction, and the information on cash available includes security code and available cash amount which could be spent at transaction, while the available cash amount corresponds to the specified amount of money deposited into the system in the specified account record (38), while the security code comprises a fixed part of the code ensured by the bank to confirm a deposit of the specified amount of money, and the information on cash available enables to authorize the specified transaction.

The disadvantage of this system is that payment in virtual cash is effected through a single processing center. Availability of a single processing center creates a single system failure point in conducting financial transactions, forms the dependence of system participants on the processing center and requires confidence in the processing center. Besides, the payment guarantee in this system is the amount deposited on the client's account in the bank servicing the client, and a commercial enterprise receives the payment to its account not immediately, but only after a transfer to the bank servicing the commercial enterprise, that could take several days.

The technical result of the invention is the system enhancement due to making financial transactions directly between user accounts online without involving bank systems and payment systems, and implementation of the requirements to instant payment systems: accessibility, immediacy, irrevocability, simplicity and security.

The technical result is achieved due to the fact that in the decentralized digital settlement service system, comprising i bank servers, where i = 1, 2, 3, ..., N, the following is additionally embedded: distributed ledger - blockchain, customer portal and k mobile devices of customers, where k =1, 2, 3, ..., M, which all elements are interconnected through telecommunication facilities, where each bank server comprises automated bank system with data base storing customer profiles, customer accounts, transactions, postings, consolidated accounts of digital units of account, bank clearing accounts and blockchain interoperating platform, which consists of blockchain access module storing public and private bank keys, limit module and customer account control module, where the customer portal comprises a blockchain access module storing public and private portal keys, and each customer mobile device comprises e-wallet application, where user public and private keys are stored.

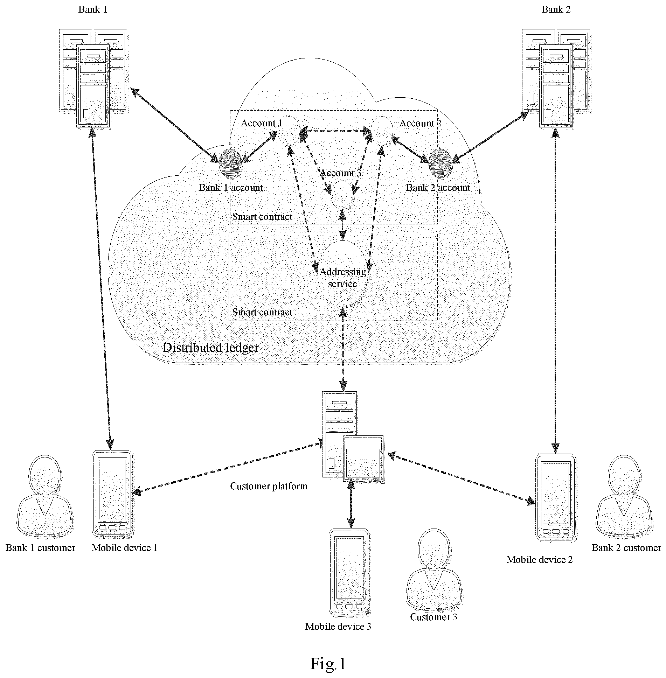

Fig. 1 illustrates a schematic diagram of the decentralized digital settlement service system.
Fig. 2 illustrates a block diagram of the decentralized digital settlement service system.
Fig. 3 illustrates a scheme of settlements using decentralized digital settlement service by the example of funds transfer between two customer accounts of different banks.
Fig. 4, Fig. 5, Fig. 6 and Fig. 7 illustrate an example of the decentralized digital settlement service system operation for 2 banks and 3 customer accounts (depositing of accounts in blockchain, transfer between accounts, transfer from account to bank account, clearing and settlements).
Fig. 8 illustrates a block diagram of clearing and settlement algorithm.
Fig. 9 illustrates an example of multilateral clearing for N banks.

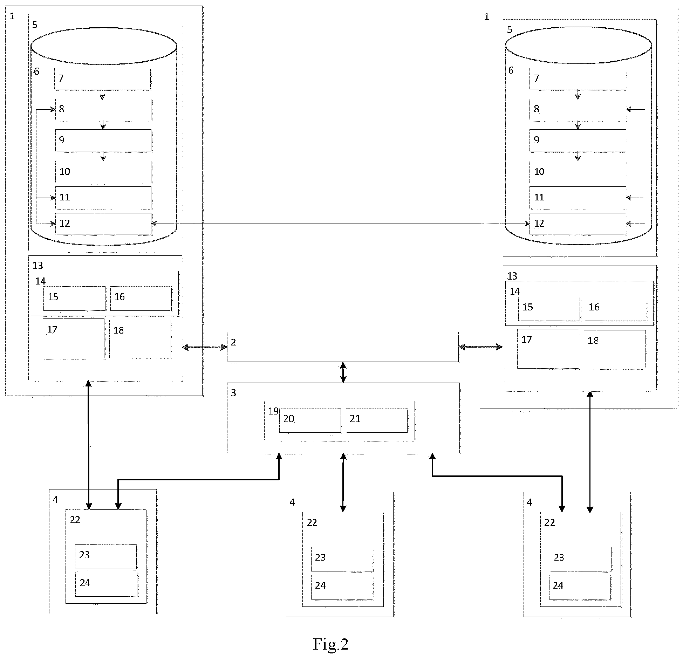

The decentralized digital settlement service system (Fig. 2) comprises i bank servers, where i = 1, 2, 3, ..., N, distributed ledger - blockchain 2, customer portal 3 and k mobile devices of customers 4, where k =1, 2, 3, ..., M, which all elements are interconnected through telecommunication facilities, where each bank server 1 comprises automated bank system 5 with data base 6 storing customer profiles 7, customer accounts 8, transactions 9, postings 10, consolidated accounts of digital units of account 11, bank clearing accounts 12 and a platform for interoperating with blockchain 13, which consists of blockchain access module 14 storing public 15 and private 16 bank keys, limit module 17 and customer account control module 18, where the customer portal 3 comprises a blockchain access module 19 storing public 20 and private 21 portal keys, and each customer mobile device 4 comprises e-wallet 22 application, where private 23 and public 24 user keys are stored.

A method of using the distributed ledger (blockchain) is offered in the system for registration of financial transactions executed through the decentralized digital settlement service directly between accounts of e-wallet users, without intermediaries represented by payment systems, and also for clearing between financial institutions (banks) - participants in the decentralized digital settlement service system. Transactions recorded in the blockchain are the guarantee of their payment by the bank for a possibility of executing instant transfer of funds from customer to customer or payment to a commercial enterprise involved in the payment transaction.

The following terms are used in the description:

The distributed ledger (blockchain) - the distributed decentralized platform of applications and the data base operating via peer-to-peer protocol between the blockchain nodes. Information in the blockchain is stored in the form of continuous serial chain of blocks (linked list) arranged by certain rules. The blocks are stored in the multiple computers - blockchain network nodes independently of one another. Data before entering the blockchain are checked with the use of consensus mechanism - cryptographic algorithm of new blocks acknowledgment by blockchain network nodes.

Account - account in the blockchain. Account is uniquely identified by address in the blockchain. Account address value is computed by cryptographic one-way hash function of account holder public key. Individual element - financial statement is allocated for each currency and digital asset issuing bank. The financial statement is a structure with the following attributes: currency, issuing bank identifier, balance. 4 types of account are considered in this invention - bank account, smart contract account, customer portal account and user account.

Account identifier - unique account identifier in the blockchain. Mobile phone number, e-mail address, etc. could be used as an account identifier. Identifier value is used to search for account address value in the blockchain. Identifier value is stored as a hash in the distributed ledger. In order to obtain account address value by identifier value, the hash - table in the distributed ledger is used in the form of key-value link, where key - account identifier hash, value - account address.

Smart contract - computer program, which is executed at all blockchain nodes providing maximum confidence in the results of its execution. The core value of smart contract is that its execution is initiated by user or other event in blockchain network and it is impossible to influence the smart contract execution progress after starting.

Addressing service - service enabling to use simplified or alternative beneficiary account identifiers for making wire payments and transfers. Addressing service is implemented in the blockchain smart contract.

Digital unit of account (DUA) - measurable accounting unit of values in the distributed ledger which is a digital equivalent of deposited asset (monetary funds, bill, bonds, stocks, etc.) in the Bank system.

E-wallet - mobile application by means of which the accounts are controlled in the distributed ledger using a holder private key.

Currently, such payment instruments as bank accounts, cards and cheques are used for cashless settlements. However, using such payment instruments could be disadvantageous for banks and commercial enterprises. For example, it could take several days for a commercial enterprise to receive monetary funds to its account, which are transferred by transaction payment instrument due to transaction processing, clearing and settlement. Whereas, payments made by paper currency enable the commercial enterprise to get monetary funds immediately and use them at once. Using payment instruments could be disadvantageous for commercial enterprises, since there is no guarantee that a deal is completely paid, and as result the commercial enterprise risks not to receive payment at all, if the consumer actually does not have funds or bank license is revoked.

Therefore, there is a need for technical solution where payment transaction could be guaranteed by a method easily checkable by a beneficiary of payment and a bank where beneficiary account is opened. Guarantee confirms a possibility of a commercial enterprise or a personal customer to spent money immediately after transaction recording in the distributed ledger (blockchain).

Improving the settlement system efficiency is ensured by the fact that:

- settlements are executed online;
- service finance transactions are executed directly between user accounts without involving bank and payment systems;
- there are no fees to payment systems (VISA, MasterCard and others);
- operating costs for settlement maintenance are reduced;
- digital asset turnover in the distributed ledger is controlled by banks.

The claimed technical solution enables to ensure:

- payment transparency and transaction identification (who is the issuer of digital unit of account, who transferred and to whom) by tracking transaction chains in the distributed ledger or transaction log. Identification is executed by comparison of account address and customer profile in the bank. Account address is stored in the customer profile during transactions with customer account or card;
- making financial transactions between users directly via peer-to-peer protocol and without intermediaries - automated bank systems and payment systems;
- execution of settlements online;
- instant receipt of payments and transfers to the beneficiary account;
- implementing complex business logic of financial transactions through smart contracts (limits and allowed/prohibited transactions for different types of customers);
- refunding a customer from the account if holder private key is lost (blocking of funds in the account and refunding to the bank account through the bank account);
- support of external account identifier to enable identifier payments.

The decentralized digital settlement service system functions as follows.

In contrast to known embodiments of blockchain settlements in cryptocurrency (Bitcoin, Ethereum, Litecoin and others) this system uses settlement mechanism by means of digital unit of account (DUA) - unit of values in the distributed ledger. DUA is issued by banks - participants and is ensured by fiat currency at a clearing account within each bank limits. Individual limit for DUA issue could be set for each issuing bank. DUA issue is reflected in a consolidated account of digital units of account and in a balance sheet of banks - participants in the decentralized digital settlement service (DDSS). Issue is controlled by banks - participants and dedicated regulator which compares DUA issue amount reflected in the bank account balance sheet to the amount of collateral on the consolidated account of digital units of account and also to the issue limit set for each bank. One of the banks - settlement participants on a permanent basis or each of the banks in turn could exercise a function of the regulator.

When in operation, the decentralized digital settlement service system provides with the following opportunities:

- creation of user accounts in blockchain;
- registration of user accounts in the bank customer profile;
- depositing of user accounts with DUA in blockchain from the customer bank account or from the customer card;
- DUA transfer between accounts in blockchain;
- transfer of funds from the own account to bank account or card;
- clearing and settlements between the banks - participants in the decentralized digital settlement service system.

DDSS users form a pair of cryptographic keys (public and private key) by means of mobile application - E-wallet (or by means of the distributed ledger platform) and use them to create account in blockchain.

Blockchain interoperating platform provides with the following functionality:

- bank systems integration with blockchain;
- customer mobile devices integration with blockchain;
- DDSS infrastructure control;
- control and providing an access to DDSS reference data;
- user account control in blockchain (registration of accounts, blocking, unblocking, deleting accounts);
- account holder authentication;
- delivery of transaction result messages to users;
- payment identification in blockchain by comparison of account address and bank customer identifier.

Blockchain access module ensures safe storage and use of bank account private keys for transaction electronic signature generation. Electronic signature is a mandatory attribute for transaction and it is used by blockchain for holder authentication. During transaction electronic signature verification the account public key is extracted and account address is computed. Transaction could be executed only through the account opened directly in the blockchain. In DSS - it is bank account or customer portal account.

All transactions are electronically signed in private (closed) key of the account - transaction originator. During electronic signature verification the account public key is extracted and account address is computed. The obtained address should be used for account transaction.

Account control module is designed as a firmware and it provides for account holder authentication and is responsible for business logic of account transactions. Account control module business logic is also implemented inside smart contracts located in the distributed ledger, that ensures single and transparent settlement service for all participants, and also it excludes a possibility of unauthorized and malicious actions, since smart contracts are executed in all blockchain nodes during acknowledgment of new blocks. Account control module smart contract, irrespective of the called function or method, executes account holder authentication extracting the public key of the account - transaction originator from electronic signature. The obtained public key value is transformed to the account address by cryptographic operations. Account address in the smart contract storage indicates the account attributes: type, balance, limits.

All actions, which change account state, are executed through blockchain transactions, which in turn call smart contract functions or methods.

Limit module is designed as a firmware and it provides for executing transactions in accordance with regulatory requirements and current legislation. Limit module supports the following set of limits depending on DDSS user account type:

- transaction amount limits;
- balance limits;
- cumulative daily limits;
- cumulative monthly limits.

Each account stores information on current limit balances and before making a transaction the limit module compares transaction values amount to the current limits for this account type, and in case of exceeding it refuses the transaction.

Limit module business logic is implemented on the platform and inside smart contract in the distributed ledger, that ensures guaranteed meeting the regulatory requirements during use of consensus mechanism.

Settlement participants are banks, legal entities and individuals (users).

Accounting of DUA issued by banks is executed in individual elements of smart contract data linked to the bank account address, and DUA of different banks are not mixed within the life cycle. It is necessary to provide for accounting mutual claims occurred between the banks when servicing DUA.

Data field set - balances in terms of each bank issuing DUA is created for all customer and bank accounts in the smart contract storage. Balance data are stored in the smart contract storage as key - value. The key is the account address value, which is computed through the account public key hash, and the value is dynamic array of structures storing DUA information in terms of issuing bank. When transferring DUA from one account to the other one, only data elements of the array with one issuing bank code value are involved. Provided that, funds issued by several banks could be transferred in one transaction.

DUA values issued by the bank are stored in the bank account, in the data element corresponding to the bank code, and this bank claims to other issuing banks are stored in the other elements.

The structure of bank account balance data could be represented by square matrix, which order equals to the number of banks - participants in the decentralized digital settlement service:

- On the bank Balance[i,i] amount of funds issued by bank i is reflected.
- On the balance Balance[i,j] - bank j retirement to i.

When depositing funds issued by the other bank from the customer account to the bank account, the claims to issuing banks are reflected in the smart contract in the acquiring bank balance. Banks-participants see current values of claims and liabilities to each other and can make settlements, for example, using LORO/NOSTRO correspondent accounts.

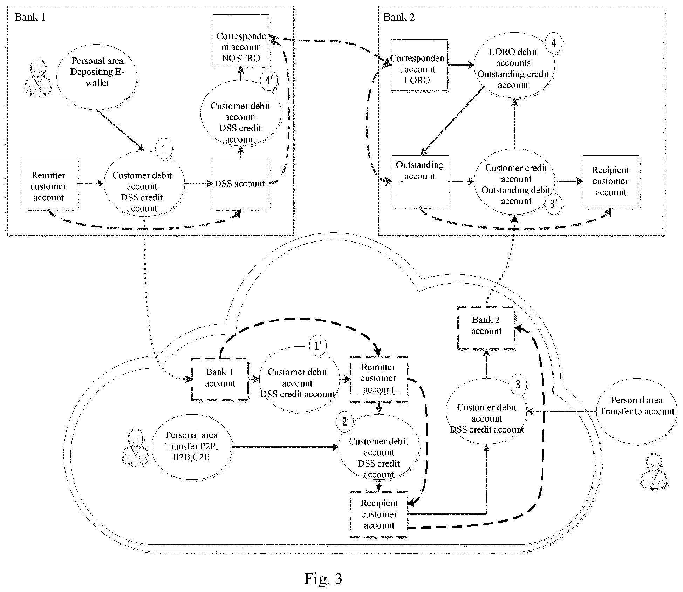

A scheme of settlements using decentralized digital settlement service when transferring funds between two customer accounts of different banks is illustrated in Fig. 3, where the following flows are shown:

1. User - remitter initiates depositing of its account in the blockchain from the bank account. Limit module verifies transaction amount limit and cumulative limits of the remitter account in accordance with the account type. If the limits correspond to the setting values, the transaction goes on. Monetary funds are charged off the customer account and credited to DSS consolidated account. Account control module authenticates the account holder.
Digital units of account are charged off the Bank account and credited to the customer account.
2. User - remitter initiates transfer of the amount less or equal to the account balance to the other user account. Limit control smart contract verifies a possibility of funds transfer - checks a balance limit and cumulative limits of the recipient account in accordance with its type. If the transaction does not exceed the limits set in DDSS settings, the transaction goes on. Digital units of account in the transfer amount are charged off the remitter account and credited to the recipient account.
3. User - recipient of the transfer initiates crediting the Bank account from its account. Account control module authenticates the account holder. Digital units of account are charged off the customer account and credited to the bank account.

Crediting the Bank account causes the event and DUA receipt message. The message causes monetary funds transfer to the customer-recipient account in the automated bank system. The posting Debit to outstanding account and Credit to customer account is carried out. Requirements to the issuing bank are reflected in the bank account and outstanding account.

4. According to clearing results the settlements between banks are made with the use of correspondent accounts.

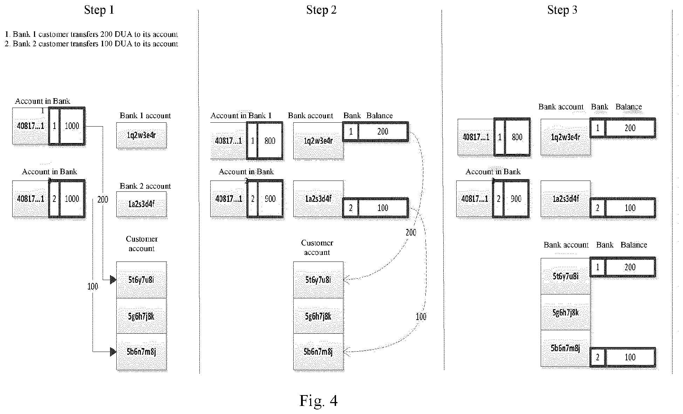

Fig. 4, Fig. 5, Fig. 6 and Fig. 7 illustrate an example of the decentralized digital settlement service system functioning for 2 banks and 3 customer accounts.

Fig. 4 illustrates a scheme of depositing the customer account from the bank account.

The Bank 1 customer transfers 200 DUA to its account in the blockchain with the identifier 5t6y7u8i (the first 8 symbols of the customer public key hash are used as account identifier in this example). The Bank 2 customer transfers 100 DUA to its account in the blockchain with the identifier 5b6n7m8j.

At step 1 the users initiate transactions of depositing the account by means of mobile application - E-wallet. At step 2 the funds are transferred from the customer bank accounts to bank accounts in the blockchain, and at the same time the customer account balances are decreased by the corresponding amount and DSS account balances in the automated bank systems are increased. At step 3 the customer account balances are increased in smart contract.

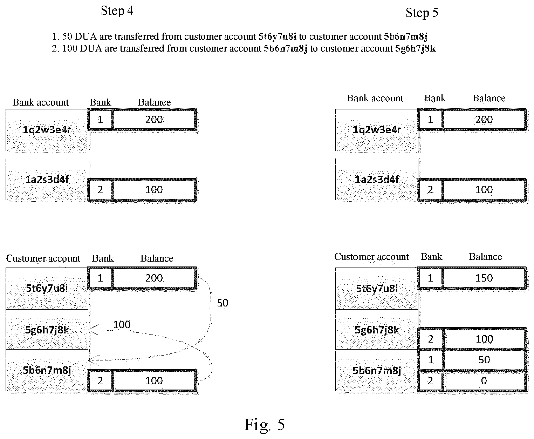

Fig. 5 illustrates a scheme of DUA transfer between customer accounts in the blockchain.

At step 4 50 DUA are transferred from the customer account 5t6y7u8i to the customer account 5b6n7m8j, 100 DUA are transferred from the customer account 5b6n7m8j to the customer account 5g6h7j8k.

At step 5 the transfer transaction is finished that is reflected by change in account balances. Since the system accounts for the digital units of account of different banks separately, Fig. 5 illustrates that on the account 5b6n7m8j the Bank 1 DUA balance is 50 units and the Bank 2 DUA balance is 0 after transfers.

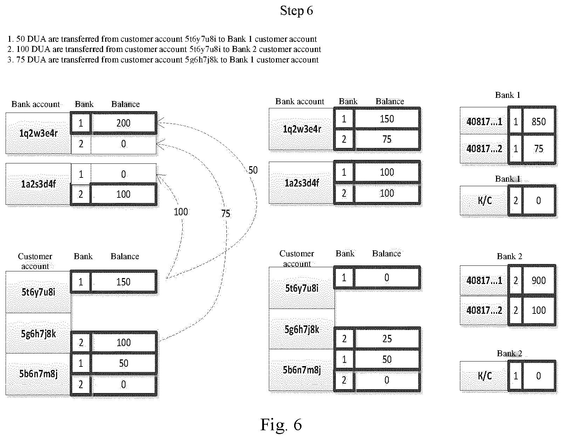

Fig. 6 illustrates the transfer of funds from the blockchain accounts to the bank accounts. At step 6 50 DUA are transferred from the customer account 5t6y7u8i to the Bank 1 account, 100 DUA are transferred from the customer account 5t6y7u8i to the Bank 2 account, 75 DUA are transferred from the customer account 5g6h7j8k to the Bank 1 account. As a result of transfer transactions the blockchain account balances and customer bank accounts are changed correspondingly.

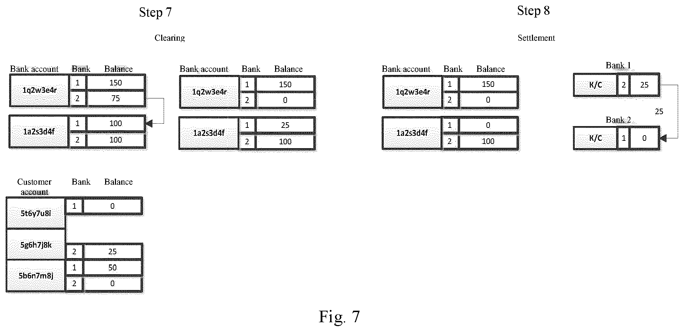

Fig. 7 illustrates clearing and settlements between the banks-participants in the decentralized digital settlement service system. At step 7 multilateral clearing - determination of total claims and claims of settlement participants. At step 8 the banks-participants based on the results of clearing in the automated bank systems initiate settlement transactions, for example, using LORO/NOSTRO correspondent accounts.

The decentralized digital settlement service system implements multilateral clearing, wherein settlements between the participants are made according to total claims and claims of the participants. Multilateral clearing enables to optimize inter-bank settlements, reducing number of transactions from $\frac{n(n-1)}{2}$ to ($n$ - $1$) transactions.

Clearing module is implemented inside the smart contract that excludes a possibility of of unauthorized and malicious actions. Clearing module is a single service for banks-participants in DDSS, single storage and centre for processing information on mutual bank claims and liabilities.

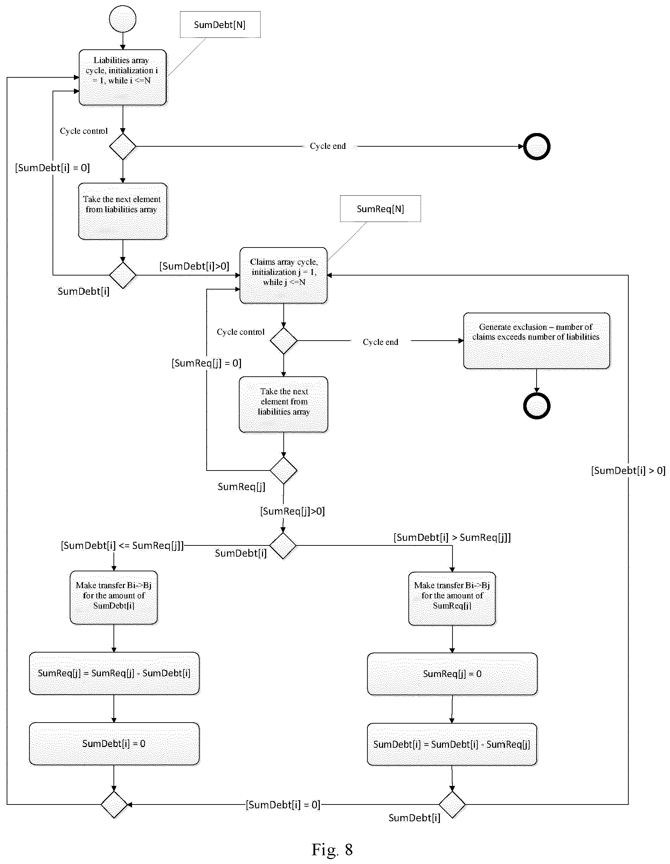

Multilateral clearing algorithm is illustrated in Fig. 8. Multilateral clearing is executed in several steps:

Step 1. Computing total claims and liabilities
Plotting the banks total liabilities vector:

$$\begin{pmatrix} SumDebt^{B1} \\ \vdots \\ SumDebt^{Bn} \end{pmatrix}$$

Plotting the banks total claims vector:

$$\begin{pmatrix} SumReq^{B1} & \dots & SumReq^{Bn} \end{pmatrix}$$

Step 2. Netting

$$SumDebt^{Bi} = \begin{cases} 0, \text{если } SumDebt^{Bi} \leq SumReq^{Bi} \\ SumDebt^{Bi} - SumReq^{Bi}, \text{если} SumDebt^{Bi} > SumReq^{Bi} \end{cases}$$

$$SumReq^{Bi} = \begin{cases} SumReq^{Bi} - SumDebt^{Bi}, \text{если } SumDebt^{Bi} \leq SumReq^{Bi} \\ 0, \text{если} SumDebt^{Bi} > SumReq^{Bi} \end{cases}$$

Step 3. Computing summarized claims and liabilities

Step 4. Claim and liability messages are sent to the related banks, and summarized claims and liabilities in the smart contract are reduced to zero. Banks settle between themselves using correspondent accounts.

When the system is running either in series or using participant correspondent banking matrix, all liability vector non-zero cells are tracked, and transfers are made from the liability vector cell to the claims vector non-zero cells until the liability vector cell balance is reduced to zero; when the balance is zero there is switching to the next non-zero cell. As a result, we obtain up to ($n$ - $1$) settlement transactions between banks. Claim and liability messages are sent to the banks-participants, and postings to LORO and NOSTRO accounts are made.

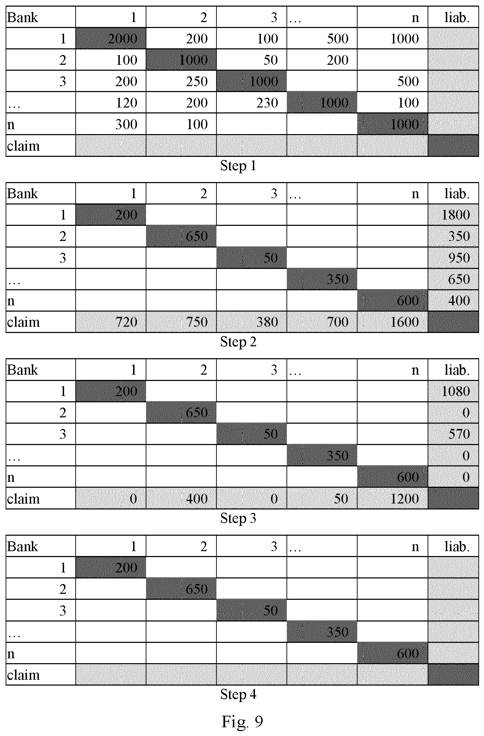

Fig. 9 illustrates an example of multilateral clearing for N banks - participants in the decentralized digital settlement service.

At step 1 there is constructing the mutual claims and liabilities matrix of banks-participants, wherein B[s,r] element of each matrix line reflects bank s indebtedness or liability to bank r, and B [s,r] element of the matrix column reflects bank r claim to bank s.

At step 2 there is computing the vectors of bank-participant total claims and liabilities as amounts of corresponding lines and columns of the mutual claims and liabilities matrix.

At step 3 there is netting of banks-participants as participant total claims and liabilities vector difference.

Thus, as illustrated by the example in Fig. 9, as result of settlements:

- Bank 1 is to transfer 400 DUA to Bank 2;
- Bank 1 is to transfer 50 DUA to Bank 4;
- Bank 1 is to transfer 630 DUA to Bank n;
- Bank 3 is to transfer 570 DUA to Bank n.

After settlements the summarized claims and liabilities in the smart contract are reduced to zero (step 4).

Thus, the decentralized digital settlement service system enables to execute financial transactions directly between user accounts without involving bank and payment systems, online, ensure instant receipt of funds by beneficiary and transparency of all settlements for banks-participants in DDSS, ensure bank-participant monitoring of digital asset turnover and possibility of spending funds immediately after their receipt to user account in the blockchain.

## Claims

1. The decentralized digital settlement service system, comprising i bank servers, where i = 1, 2, 3, ..., N, **characterized in that** the following is additionally embedded into it: distributed ledger - blockchain, customer portal and k mobile devices of customers, where k =1.2, 2, 3, ..., M, which all elements are interconnected through telecommunication facilities, where each bank server comprises automated bank system with data base storing customer profiles, customer accounts, transactions, postings, consolidated accounts of digital units of account, bank clearing accounts and blockchain interoperating platform, which consists of blockchain access module storing public and private bank keys, limit module and customer account control module, where the customer portal comprises a blockchain access module storing public and private portal keys, and each customer mobile device comprises e-wallet application, where user public and private keys are stored.

Bank 1

Bank 2

Account 1

Account 2

Account 3

Bank 1 account

Bank 2 account

Smart contract

Addressing
service

Smart contract

Distributed ledger

Customer platform

Bank 1 customer    Mobile device 1

Bank 2 customer

Mobile device 2

Mobile device 3

Customer 3

Fig.1

Fig.2

Bank 1

Personal area
Depositing E-
wallet

Corresponde
nt account
NOSTRO

4'

Customer debit
account
DSS credit
account

1

Remitter
customer
account

Customer debit
account
DSS credit
account

DSS account

Bank 2

Corresponden
t account
LORO

LORO debit
accounts
Outstanding credit
account

4

Outstanding
account

Customer credit
account
Outstanding debit
account

3'

Recipient
customer
account

Bank 2
account

Bank 1
account

1'

Customer debit
account
DSS credit account

Remitter
customer
account

Customer debit
account
DSS credit account

3

Personal area
Transfer to account

Personal area
Transfer P2P,
B2B,C2B

2

Customer debit
account
DSS credit
account

Recipient
customer
account

Fig. 3

Step 1

Step 2

Step 3

1. Bank 1 customer transfers 200 DUA to its account
2. Bank 2 customer transfers 100 DUA to its account

Account in Bank

| 40817...1 | 1 | 1000 |

Bank 1 account

| 1q2w3e4r |

Account in Bank

| 40817...1 | 2 | 1000 |

Bank 2 account

| 1a2s3d4f |

200

100

Customer account

| 5t6y7u8i |
| 5g6h7j8k |
| 5b6n7m8j |

Account in Bank 1

| 40817...1 | 1 | 800 |

Account in Bank

| 40817...1 | 2 | 900 |

Bank account   Bank  Balance

| 1q2w3e4r | 1 | 200 |

| 1a2s3d4f | 2 | 100 |

200

Customer account

| 5t6y7u8i |
| 5g6h7j8k |
| 5b6n7m8j |

100

Account in Bank

| 40817...1 | 1 | 800 |

Account in Bank

| 40817...1 | 2 | 900 |

Bank account   Bank  Balance

| 1q2w3e4r | 1 | 200 |

| 1a2s3d4f | 2 | 100 |

Bank account   Bank  Balance

| 5t6y7u8i | 1 | 200 |
| 5g6h7j8k |   |     |
| 5b6n7m8j | 2 | 100 |

Fig. 4

11

Step 4                                          Step 5

1. 50 DUA are transferred from customer account **5t6y7u8i** to customer account **5b6n7m8j**
2. 100 DUA are transferred from customer account **5b6n7m8j** to customer account **5g6h7j8k**

| Bank account | Bank | Balance |
|---|---|---|
| 1q2w3e4r | 1 | 200 |
| 1a2s3d4f | 2 | 100 |

| Customer account | Bank | Balance |
|---|---|---|
| 5t6y7u8i | 1 | 200 |
| 5g6h7j8k | | |
| 5b6n7m8j | 2 | 100 |

50

100

| Bank account | Bank | Balance |
|---|---|---|
| 1q2w3e4r | 1 | 200 |
| 1a2s3d4f | 2 | 100 |

| Customer account | Bank | Balance |
|---|---|---|
| 5t6y7u8i | 1 | 150 |
| 5g6h7j8k | 2 | 100 |
| 5b6n7m8j | 1 | 50 |
| | 2 | 0 |

Fig. 5

Step 6

1. 50 DUA are transferred from customer account 5t6y7u8i to Bank 1 customer account
2. 100 DUA are transferred from customer account 5t6y7u8i to Bank 2 customer account
3. 75 DUA are transferred from customer account 5g6h7j8k to Bank 1 customer account

Fig. 6

Step 7                                                            Step 8

Clearing                                                            Settlement

| Bank account | Bank | Balance |
|---|---|---|
| 1q2w3e4r | 1 | 150 |
| | 2 | 75 |
| 1a2s3d4f | 1 | 100 |
| | 2 | 100 |

| Bank account | Bank | Balance |
|---|---|---|
| 1q2w3e4r | 1 | 150 |
| | 2 | 0 |
| 1a2s3d4f | 1 | 25 |
| | 2 | 100 |

| Bank account | Bank | Balance |
|---|---|---|
| 1q2w3e4r | 1 | 150 |
| | 2 | 0 |
| 1a2s3d4f | 1 | 0 |
| | 2 | 100 |

**Bank 1**

| K/C | 2 | 25 |
|---|---|---|

25

**Bank 2**

| K/C | 1 | 0 |
|---|---|---|

| Customer account | Bank | Balance |
|---|---|---|
| 5t6y7u8i | 1 | 0 |
| 5g6h7j8k | 2 | 25 |
| 5b6n7m8j | 1 | 50 |
| | 2 | 0 |

Fig. 7

14

SumDebt[N]

Liabilities array
cycle, initialization i
= 1, while i <=N

Cycle control

Cycle end

[SumDebt[i] = 0]

Take the next element
from liabilities array

[SumDebt[i]>0]

SumDebt[i]

SumReq[N]

Claims array cycle,
initialization j = 1,
while j <=N

Cycle control

Cycle end

Generate exclusion – number of
claims exceeds number of liabilities

[SumReq[j] = 0]

Take the next
element from
liabilities array

SumReq[j]

[SumReq[j]>0]

[SumDebt[i] > 0]

[SumDebt[i] <= SumReq[j]]

SumDebt[i]

[SumDebt[i] > SumReq[j]]

Make transfer Bi->Bj
for the amount of
SumDebt[i]

Make transfer Bi->Bj
for the amount of
SumReq[j]

SumReq[j] = SumReq[j] - SumDebt[i]

SumReq[j] = 0

SumDebt[i] = 0

SumDebt[i] = SumDebt[i] - SumReq[j]

[SumDebt[i] = 0]

SumDebt[i]

Fig. 8

| Bank | 1 | 2 | 3 | ... | | n | liab. |
|---|---|---|---|---|---|---|---|
| 1 | 2000 | 200 | 100 | 500 | 1000 | | |
| 2 | 100 | 1000 | 50 | 200 | | | |
| 3 | 200 | 250 | 1000 | | 500 | | |
| ... | 120 | 200 | 230 | 1000 | 100 | | |
| n | 300 | 100 | | | 1000 | | |
| claim | | | | | | | |

Step 1

| Bank | 1 | 2 | 3 | ... | | n | liab. |
|---|---|---|---|---|---|---|---|
| 1 | 200 | | | | | | 1800 |
| 2 | | 650 | | | | | 350 |
| 3 | | | 50 | | | | 950 |
| ... | | | | 350 | | | 650 |
| n | | | | | 600 | | 400 |
| claim | 720 | 750 | 380 | 700 | 1600 | | |

Step 2

| Bank | 1 | 2 | 3 | ... | | n | liab. |
|---|---|---|---|---|---|---|---|
| 1 | 200 | | | | | | 1080 |
| 2 | | 650 | | | | | 0 |
| 3 | | | 50 | | | | 570 |
| ... | | | | 350 | | | 0 |
| n | | | | | 600 | | 0 |
| claim | 0 | 400 | 0 | 50 | 1200 | | |

Step 3

| Bank | 1 | 2 | 3 | ... | | n | liab. |
|---|---|---|---|---|---|---|---|
| 1 | 200 | | | | | | |
| 2 | | 650 | | | | | |
| 3 | | | 50 | | | | |
| ... | | | | 350 | | | |
| n | | | | | 600 | | |
| claim | | | | | | | |

Step 4

Fig. 9

## INTERNATIONAL SEARCH REPORT

| | International application No. |
|---|---|
| | PCT/RU 2019/050106 |

| A. CLASSIFICATION OF SUBJECT MATTER | |
|---|---|
| | *G06Q 40/02 (2012.01)* |
| | *G06Q 40/06 (2012.01)* |

According to International Patent Classification (IPC) or to both national classification and IPC

| B. FIELDS SEARCHED |
|---|
| Minimum documentation searched (classification system followed by classification symbols) |
| G06Q 40/02, 40/06 |
| Documentation searched other than minimum documentation to the extent that such documents are included in the fields searched |
| Electronic data base consulted during the international search (name of data base and, where practicable, search terms used) |
| PatSearch (RUPTO Internal), USPTO, PAJ, Espacenet, Information Retrieval System of FIPS |

| C. DOCUMENTS CONSIDERED TO BE RELEVANT | | |
|---|---|---|
| Category* | Citation of document, with indication, where appropriate, of the relevant passages | Relevant to claim No. |
| A | RU 2406149 C2 (KVEZHOMM INKORPOREITED) 10.12.2010 | 1 |
| A | RU 2643503 C1 (IKONOMOV ARTASHES VALEREVICH) 01.02.2018 | 1 |
| A | US 2017/0032294 A1 (INTERNATIONAL BUSINESS MACHINES CORPORATION) 02.02.2017 | 1 |
| A | US 2011/0191162 A1 (BANK OF AMERICA CORPORATION) 04.08.2011 | 1 |

| ☐ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 26 September 2019 (26.09.2019) | 17 October 2019 (17.10.2019) |

| Name and mailing address of the ISA/ RU | Authorized officer |
|---|---|
| Facsimile No. | Telephone No. |

Form PCT/ISA/210 (second sheet) (January 2015)

**EP 3 798 965 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170323294 A1
- RU 2406149 C2